# EUROPÄISCHE PATENTSCHRIFT

(11) **EP 2 407 843 B1**
(45) Veröffentlichungstag und Bekanntmachung des Hinweises auf die Patenterteilung: **07.05.2014**
(21) Anmeldenummer: 10007119.0
(22) Anmeldetag: 09.07.2010
(51) Int. Cl.: G05B 19/418, H04L 29/06

(54) **Sichere Datenübertragung in einem Automatisierungsnetzwerk**
Secure data transfer in an automation network
Transmission de données sécurisée dans un réseau d'automatisation

(43) Veröffentlichungstag der Anmeldung: 18.01.2012
(73) Patentinhaber: Siemens Aktiengesellschaft, 80333 München (DE)
(72) Erfinder: Koppers, Joachim, 91301 Forchheim (DE)

(56) Entgegenhaltungen:
- EP-A1- 1 403 749
- EP-A1- 2 159 653
- WO-A1-2008/022606
- DE-A1- 10 124 800

## Beschreibung

Die Erfindung betrifft industrielle Automatisierungsnetzwerke, insbesondere die sichere Datenübertragung in einem industriellen Automatisierungsnetzwerk.

Ein industrielles Automatisierungsnetzwerk besteht üblicherweise aus zumindest einem Steuergerät und zumindest einer Baugruppe. Das Steuergerät dient zur Programmierung der Baugruppe und umfasst hierfür eine Programminstanz. Die Baugruppe kann beispielsweise eine Maschinensteuerung einer Maschine in einer Produktionsstraße sein. Ein Automatisierungsnetzwerk dient dazu, industrielle Maschinen oder Anlagen selbstständig und ohne die Mitwirkung von Menschen zu betreiben.
Es müssen also Daten von der Programminstanz zur Baugruppe übertragen werden, damit das Steuergerät die Baugruppe programmieren kann. Diese Daten werden Projektierungsdaten genannt. Wenn die Übertragung der Projektierungsdaten von der Programminstanz zur Baugruppe abhörsicher und gegen Manipulationen geschützt übertragen werden sollen, wird üblicherweise ein sicheres Übertragungsprotokoll wie HTTPS oder IPSEC verwendet. Für diese Übertragungsprotokolle müssen bestimmte Sicherheitsanforderungen erfüllt werden, die nicht durch jedes Automatisierungsnetzwerk bzw. jede Baugruppe erfüllt werden können.

Aus EP 2 159 653 A1 ist bekannt, daß zur Einräumung einer Zugriffsberechtigung auf ein rechnerbasiertes Objekt in einem Automatisierungssystem für ein Steuerungsprogramm ein Identifikator ermittelt wird, und daß der Identifikator wird mittels eines einer Steuerungs- und Überwachungseinheit des Automatisierungssystems zugeordneten privaten digitalen Schlüssels verschlüsselt wird. Anhand des rechnerbasierten Objekts wird ein erster Dienst und anhand des Steuerungsprogramms wird ein zweiter Dienst des Automatisierungssystems bereitgestellt. Der verschlüsselte Identifikator wird bei Übermittlung an einen Authentifizierungsdienst entschlüsselt und durch den Authentifizierungsdienst verifiziert. Der Authentifizierungsdienst übermittelt bei erfolgreicher Verifizierung ein zumindest befristet gültiges Token an den zweiten Dienst. Das Token wird bei einer Anforderung eines Zugriffs auf das rechnerbasierte Objekt durch das Steuerungsprogramm an den ersten Dienst zur Überprüfung übermittelt. Ein Zugriff auf das rechnerbasierte Objekt wird bei einem positiven Überprüfungsergebnis für das Steuerungsprogramm eingeräumt.

Der Erfindung liegt die Aufgabe zugrunde, ein verbessertes Verfahren zur sicheren Datenübertragung in einem Automatisierungsnetzwerk zu schaffen. Außerdem liegt der Erfindung die Aufgabe zugrunde, ein verbessertes Steuergerät und eine verbesserte Baugruppe in einem Automatisierungsnetzwerk zu schaffen und verbesserte Speichermedien für eine solche Baugruppe und ein solches Steuergerät zu schaffen.

Die der Erfindung zugrunde liegenden Aufgaben werden jeweils mit den Merkmalen der unabhängigen Patentansprüche gelöst.

Ausführungsformen der Erfindung sind in den abhängigen Patentansprüchen gegeben.

Erfindungsgemäß wird ein Verfahren zur sicheren Datenübertragung in einem Automatisierungsnetzwerk geschaffen. Das Automatisierungsnetzwerk umfasst zumindest eine Programminstanz und zumindest eine Baugruppe. Die Sicherheit der Datenübertragung wird unabhängig vom verwendeteten Übertragungsverfahren gewährleistet.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren oder/oder Umparametrieren einer oder mehrerer Steuerungseinheiten im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Einund/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Die Programminstanz verfügt über ein Programminstanzrechtesystem und die Baugruppe über ein Baugruppenrechtesystem. Das Verfahren umfasst die folgenden Schritte. Zunächst wird ein Benutzer der Programminstanz authentifiziert. Dies geschieht durch das Programminstanzrechtesystem mit Hilfe von Benutzerdaten. Die Benutzerdaten können beispielsweise ein Benutzername und ein Passwort sein oder auch andere bereits bekannte Verfahren zur Authentifizierung von Benutzern durch Programminstanzrechtesysteme umfassen.

Das Programminstanzrechtessystem ist ein Rechtesystem der Programminstanz. Das Programminstanzrechtesystem kann also auf der einen Seite einen Benutzer mit Hilfe der Benutzerdaten authentifizieren und auf der anderen Seite verschiedenen Benutzern unterschiedliche Rechte zuweisen. Es ist zu beachten, dass es ebenfalls möglich ist, dass allen authentifizierten Benutzern sämtliche Rechte eingeräumt werden.

Das Baugruppenrechtessystem ist ein Rechtesystem der Baugruppe. Das Baugruppenrechtesystem kann ebenso auf der einen Seite einen Benutzer mit Hilfe der Benutzerdaten authentifizieren und auf der anderen Seite verschiedenen Benutzern unterschiedliche Rechte zuweisen. Es ist auch hier zu beachten, dass es ebenfalls möglich ist, dass allen authentifizierten Benutzern sämtliche Rechte eingeräumt werden.

Die zu übertragenden Daten werden durch die Programminstanz verschlüsselt und signiert. Beispielsweise umfasst die Programminstanz hierfür eine signierte DLL-Datei oder eine signierte ausführbare Datei, die somit gegen Manipulationen geschützt ist. Vorzugsweise ist die Programminstanz für die Verschlüsselung und Signierung der Daten mit asymmetrischen Schlüsseln ausgestattet. Die Daten umfassen ebenfalls die Benutzerdaten. Die Benutzerdaten werden also zusammen mit den zu übertragenden Projektierungsdaten verschlüsselt und signiert zur Baugruppe übertragen.

In der Baugruppe werden die Daten entschlüsselt. Anschließend erfolgt eine Authentifizierung der Programminstanz gegenüber der Baugruppe. Dies kann beispielsweise dadurch geschehen, dass die Daten mit einem asymmetrischen privaten Schlüssel der Programminstanz signiert wurden und diese Signatur in der Baugruppe durch einen öffentlichen Schlüssel der Programminstanz authentifiziert wird. Die Signatur der Daten wird also in der Baugruppe überprüft. Hierdurch wird sichergestellt, dass keine Manipulationen der Daten stattgefunden hat und die Baugruppe die Daten nur von einer zur Steuerung der Baugruppe berechtigten Programminstanz empfangen hat. Durch die Signatur mit dem privaten Schlüssel der Programminstanz ist keine Datenübertragung von der Baugruppe zur Programminstanz nötig, im Gegensatz z.B. zum sogenannten Challenge-Response-Verfahren. Die Programminstanz wird authentifiziert, ohne dass Daten von der Baugruppe zur Programminstanz übermittelt werden müssen.

Die entschlüsselten Daten umfassen die Benutzerdaten. Der Benutzer wird bei mit Hilfe der Benutzerdaten durch das Baugruppenrechtesystem authentifiziert. Zusätzlich kann der Benutzer zur Übertragung von Daten an die Baugruppe autorisiert werden. Es handelt sich hier also um eine nachträgliche Autorisierung. Sollte sich herausstellen, dass der Benutzer nicht zur Datenübertragung autorisiert ist, werden die Daten verworfen. Andernfalls werden die Daten zur Steuerung der Baugruppe verwendet. Dieser Schritt stellt sicher, dass der an der Programminstanz angemeldete Benutzer zur Datenübertragung an die Baugruppe berechtigt ist. Es ist also keinerlei Manipulation der Daten möglich und es werden in der Baugruppe nur Daten verarbeitet, die von autorisierten Benutzern der Programminstanz an die Baugruppe übertragen wurden. Der Übertragungsweg ist dabei völlig unerheblich. Es kann sich also auch um einen unsicheren Übertragungskanal handeln. Durch die Verschlüsselung der Daten, die Signierung der Daten und die Übertragung der Benutzerdaten an die Baugruppe sind die Daten gegen jegliche Manipulation geschützt und es ist unabhängig vom Übertragungsweg sichergestellt, dass die Daten nicht abgefangen oder manipuliert werden können.

Die besondere Sicherheit von Datenübertragungen nach Ausführungsformen der Erfindung besteht darin, dass die Benutzerdaten verschlüsselt mit den Projektierungsdaten von der Programminstanz zur Baugruppe übertragen werden und in der Baugruppe eine Authentifizierung des Benutzers durchgeführt wird. Zusätzlich zu der Authentifizierung des Benutzers in der Programminstanz und zur signierten und verschlüsselten Datenübertragung ergibt sich ein gegen Manipulationen geschütztes Automatisierungsnetzwerk, das eine sichere Datenübertragung unabhängig von der Sicherheit des Übertragungskanals bietet. Nach Ausführungsformen der Erfindung handelt es sich bei der Verschlüsselung der Daten um eine asymmetrische Verschlüsselung.

Nach Ausführungsformen der Erfindung weisen die Programminstanz und die Baugruppe jeweils einen asymmetrischen öffentlichen Programminstanzschlüssel und einen asymmetrischen öffentlichen Baugruppenschlüssel auf. Die Programminstanz weist ferner einen privaten Programminstanzschlüssel und die Baugruppe einen privaten Baugruppenschlüssel auf. Es gibt also sowohl für die Programminstanz als auch für die Baugruppe ein Schlüsselpaar, das für Signaturen und Verschlüsselungen verwendet wird. Ein Schlüsselpaar besteht jeweils aus einem öffentlichen und einem privaten Schlüssel.

Die Daten werden in der Programminstanz mit dem öffentlichen Baugruppenschlüssel verschlüsselt und mit dem privaten Programminstanzschlüssel signiert. Es ist zu beachten, dass die Daten ebenfalls die Benutzerdaten umfassen. Die von der Programminstanz zur Baugruppe übertragenen verschlüsselten und signierten Daten werden in der Baugruppe mit dem privaten Baugruppenschlüssel entschlüsselt. Die Authentifizierung der Programminstanz als Absender der Daten erfolgt mit dem öffentlichen Programminstanzschlüssel. Die Authentifizierung des Benutzers der Programminstanz erfolgt durch das Auswerten der entschlüsselten Daten.

Nach Ausführungsformen der Erfindung können die verschlüsselten und signierten Daten durch die Programminstanz auf ein Speichermedium gespeichert werden. Vor der Entschlüsselung werden die Daten in der Baugruppe vom Speichermedium gelesen. Das Speichermedium kann beispielsweise ein optisches, magnetisches und/oder digitales Speichermedium sein. Es kann sich ebenfalls um ein rotierendes Speichermedium handeln. Das Speichermedium kann also zum Beispiel ein USB-Stick, eine Speicherkarte oder eine Festplatte sein. Da die Daten verschlüsselt und signiert sind und Benutzerdaten ebenfalls mitgespeichert werden, ist es unerheblich, wie sicher die Datenspeicherung auf dem Speichermedium ist. Die Daten sind hinreichend gegenüber Manipulationen oder unautorisiertes Auslesen geschützt.

Obwohl die Daten nicht über das Automatisierungsnetzwerk übertragen werden, stellt diese Ausführungsform ebenfalls ein Verfahren zur sicheren Datenübertragung in einem Automatisierungsnetzwerk dar. Der Weg der Datenübertragung ist unabhängig vom Automatisierungsnetzwerk.

Nach Ausführungsformen der Erfindung können die verschlüsselten und signierten Daten über eine Kabelverbindung zwischen der Programminstanz und der Baugruppe übertragen werden. Es kann sich dabei auch um eine unsichere Kabelverbindung handeln, da die Daten hinreichend gegen Manipulationen oder unbefugtes Auslesen durch die Verschlüsselung, die Signierung und die Mitübertragung der Benutzerdaten gesichert sind.

Nach Ausführungsformen der Erfindung erfolgt die Datenübertragung über die Kabelverbindung mittels eines der folgenden Protokolle: MPI, Profibus, Ethernet, TCP/IP, Profinet, WLAN.

Nach Ausführungsformen der Erfindung umfassen die Daten einen symmetrischen Schlüssel für verschlüsselte Datenübertragungen von der Programminstanz zur Baugruppe. Dieser symmetrische Schlüssel kann für zukünftige Datenübertragungen verwendet werden. Die Verwendung eines symmetrischen Schlüssels kann vorteilhaft sein, wenn es sich zum Beispiel um ein deterministisches isochrones Automatisierungsnetzwerk handelt. In einem solchen Automatisierungsnetzwerk ist es wichtig, dass Daten exakt zu einem bestimmten Zeitpunkt von der Baugruppe verarbeitet werden. In diesem Fall könnte eine asymmetrische Ver- und Entschlüsselung der Daten zu lange dauern. In diesem Fall wird also der symmetrische Schlüssel mit den Benutzerdaten verschlüsselt und signiert an die Baugruppe übertragen und kann für nachfolgende Datenübertragungen verwendet werden.

Nach Ausführungsformen der Erfindung umfassen die Daten einen weiteren privaten Baugruppenschlüssel für verschlüsselte Datenübertragungen von der Programminstanz zur Baugruppe. Der weitere private Baugruppenschlüssel ersetzt den vorigeren privaten Baugruppen-Schlüssel, sodass weiterhin eine sichere Datenübertragung gewährleistet ist. Aus Sicherheitsgründen sollte ein privater Schlüssel regelmäßig ausgetauscht werden.

In einem weiteren Aspekt betrifft die Erfindung ein Steuergerät in einem Automatisierungsnetzwerk. Das Steuergerät umfasst eine Programminstanz und die Programminstanz verfügt über ein Programminstanzrechtesystem. Das Steuergerät umfasst ferner Mittel zur Authentifizierung eines Benutzers durch das Programminstanzrechtesystem mit Hilfe von Benutzerdaten zur Freigabe einer Nutzung der Programminstanz durch den Benutzer, Mittel zur Verschlüsselung und Signierung von Daten durch die Programminstanz, wobei die Daten die Benutzerdaten umfassen, und Mittel zur Übertragung der Daten über ein Übertragungsmedium.

In einem weiteren Aspekt betrifft die Erfindung eine Baugruppe in einem Automatisierungsnetzwerk. Die Baugruppe verfügt über ein Baugruppenrechtesystem. Die Baugruppe weist ferner Mittel zum Empfang von Daten, Mittel zur Entschlüsselung von Daten, Mittel zur Authentifizierung eines Steuergeräts als Absender der Daten und Mittel zur Authentifizierung eines Benutzers durch das Baugruppenrechtesystem mit Hilfe der Benutzerdaten zur Übertragung von Daten an die Baugruppe auf.

In noch einem wcitcrcn Aspekt betrifft dic Erfindung ein computerlesbares Speichermedium mit Instruktionen, die in einer Baugruppe in einem Automatisierungsnetzwerk ausgeführt werden können. Die Baugruppe verfügt über ein Baugruppenrechtesystem. Bei Ausführung der Instruktionen veranlassen die Instruktionen die Baugruppe zur Ausführung des folgenden Verfahrens. Zunächst werden Daten empfangen und entschlüsselt. Anschließend wird ein Steuergerät authentifiziert und ein Benutzer durch das Baugruppenrechtesystem mit Hilfe der Benutzerdaten authentifiziert.

Im Weiteren werden Ausführungsformen der Erfindung mit Bezugnahme auf die Zeichnungen näher erläutert. Es zeigen:
- Figur 1: eine schematische Darstellung eines Automatisierungsnetzwerks mit einer Programminstanz, einem Übertragungskanal und einer Baugruppe;
- Figur 2: eine schematische Darstellung eines Automatisierungsnetzwerks mit einer Programminstanz, einer Baugruppe, wobei die Übertragung der Daten mit Hilfe eines Speichermediums geschieht; und
- Figur 3: ein Flussdiagramm eines Verfahrens zur sicheren Datenübertragung in einem Automatisierungsnetzwerk.

Elemente der nachfolgenden Figuren, die einander entsprechen, sind mit denselben Bezugszeichen gekennzeichnet.

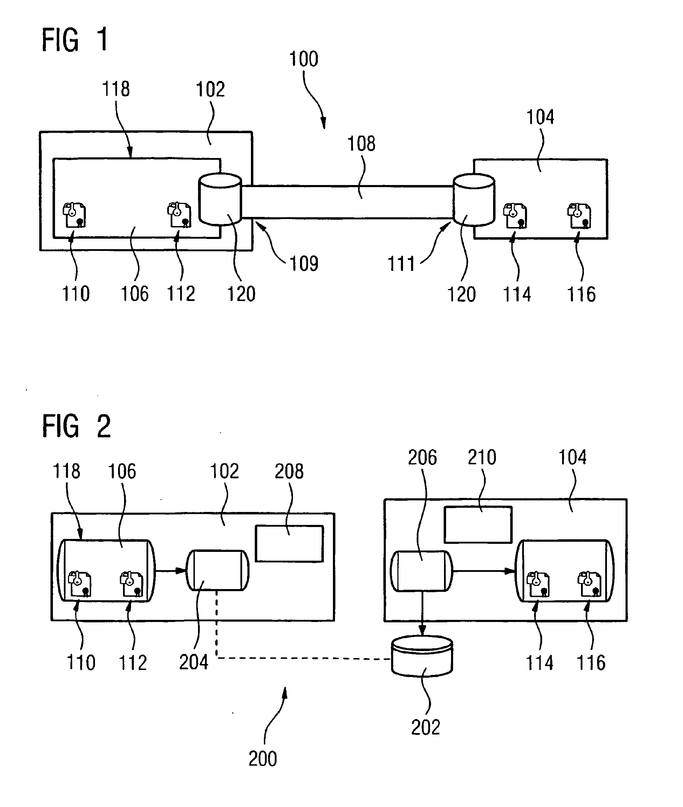

Figur 1 ist eine schematische Ansicht eines Automatisierungsnetzwerks 100 mit einem Steuergerät 102 und einer Baugruppe 104. Das Steuergerät 102 weist eine Programminstanz 106 auf. Das Steuergerät 102 und die Baugruppe 104 sind durch einen beliebigen Übertragungskanal 108 verbunden. Beliebig heißt hier, dass der Übertragungskanal 108 auch ein unsicherer Übertragungskanal sein kann. Für eine sichere Datenübertragung kommt es erfindungsgemäß nicht auf den Übertragungskanal an. Das Steuergerät 102 umfasst eine Schnittstelle 109, wodurch das Steuergerät 102 mit dem Übertragungskanal 108 verbunden ist und Daten über den Übertragungskanal 108 an die Baugruppe 104 übertragen kann. Die Baugruppe 104 umfasst eine Schnittstelle 111, wodurch die Baugruppe 104 mit dem Übertragungskanal 108 verbunden ist und Daten über den Übertragungskanal 108 von dem Steuergerät 102 empfangen kann.

Die Programminstanz verfügt über einen einen privaten Programminstanzschlüssel 110. Außerdem verfügt die Programminstanz 106 über einen öffentlichen Baugruppenschlüssel 112. Die Baugruppe 104 verfügt über einen privaten Baugruppenschlüssel 116. Außerdem verfügt die Baugruppe über den öffentlichen Programminstanzschlüssel (hier nicht dargestellt). Die öffentlichen Schlüssel stehen also beiden Einheiten zur Verfügung. Außerdem verfügt jede der Einheiten über den jeweiligen privaten Schlüssel.

Der öffentliche Baugruppenschlüssel in der Programminstanz 106 wird zur Verschlüsselung von Daten vor der Übertragung von dem Steuergerät 102 zur Baugruppe 104 verwendet. Die Daten werden außerdem mit dem privaten Programminstanz-Schlüssel 110 durch die Programminstanz 106 signiert. Die Signatur wird mit dem öffentlichen Programminstanzschlüssel in der Baugruppe 104 nach der Datenübertragung verifiziert und die Programminstanz 106 wird als Absender der Daten authentifiziert. Die Entschlüsselung der Daten erfolgt mit dem privaten Baugruppenschlüssel 116.

Vor der Datenübertragung werden Benutzerdaten 118 durch einen Benutzer an dem Steuergerät 102 eingegeben. Hierbei kann es sich beispielsweise um Anmeldedaten bestehend aus einem Benutzernamen und einem Passwort handeln. Die Benutzerdaten 118 werden an die Programminstanz 106 übertragen. Die Programminstanz 106 überträgt die Benutzerdaten 118 mit den zu übertragenden Daten an die Baugruppe 104. Die von der Programminstanz 106 an die Baugruppe 104 übertragenen Daten 120 umfassen also die Benutzerdaten 118 und Projektierungsdaten. Projektierungsdaten sind Daten, die zur Steuerung der Baugruppe 104 durch die Programminstanz 106 dienen.

Figur 2 ist eine schematische Ansicht eines Automatisierungsnetzwerks 200 mit einem Steuergerät 102 und einer Baugruppe 104. Das Steuergerät 102 weist außerdem eine Programminstanz 106 auf. Die Programminstanz 106 verfügt über einen privaten Programminstanzschlüssel 110. Außerdem verfügt die Programminstanz über den öffentlichen Baugruppenschlüssel. Die Baugruppe 104 verfügt über einen privaten Baugruppenschlüssel 116. Außerdem verfügt die Baugruppe 104 über den öffentlichen Programminstanzschlüssel (nicht gezeigt). Die Datenübertragung im Automatisierungsnetzwerk 200 vom Steuergerät 102 zur Baugruppe 104 erfolgt mittels eines Speichermediums 202. Dies kann zum Beispiel eine sogenannte Multimediacard (MMC) sein. Zunächst werden die Daten auf die Multimediacard 202 geschrieben. Dies kann beispielsweise durch einen Prozessor 204 des Steuergeräts 102 geschehen, der Zugriff auf die Multimediacard 202 hat und die Abspeicherung von Daten auf der Multimediacard 202 veranlassen kann. Die Multimediacard 202 wird dann in einen Kartenleser (nicht dargestellt) der Baugruppe 104 gesteckt, sodass ein Prozessor 206 der Baugruppe 104 Zugriff auf die Multimediacard 202 hat und die Daten auslesen kann. Die Entschlüsselung und Verifizierung der Daten erfolgt analog zu dem in Figur 1 schon beschriebenen Verfahren.

Das Steuergerät 102 verfügt außerdem über ein computerlesbares Speichermedium 208, das Instruktionen umfasst, die das Steuergerät zur Durchführung des oben beschriebenen Verfahrens veranlassen kann, wenn die Instruktionen beispielsweise durch den Prozessor 204 ausgeführt werden.

Die Baugruppe 104 verfügt ebenfalls über ein Speichermedium 210, das Instruktionen umfasst, die bei Ausführung durch Prozessor 206 die Baugruppe zur Ausführung des oben beschriebenen Verfahrens veranlasst.

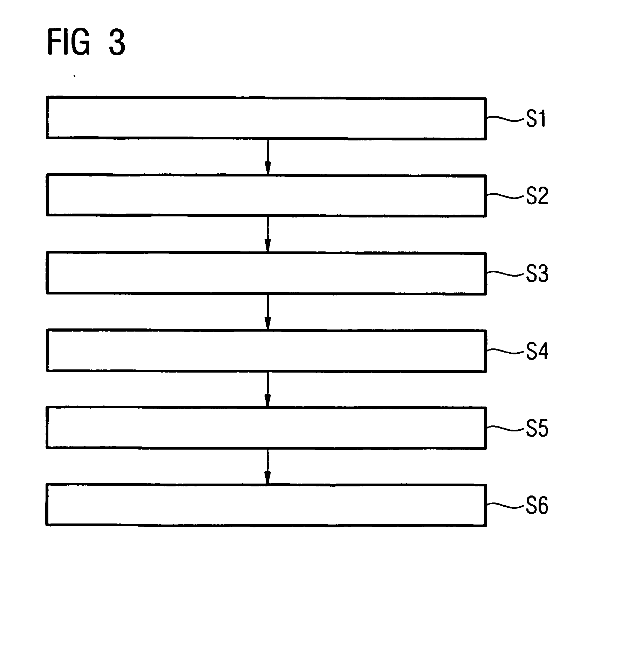

Figur 3 ist ein Flussdiagramm einer Ausführungsform der Erfindung. Zunächst wird in Schritt S1 ein Benutzer durch das Programminstanzrechtesystem mit Hilfe von Benutzerdaten authentifiziert. Es wird also sichergestellt, dass der Benutzer zur Nutzung der Programminstanz berechtigt ist. Dies geschieht beispielsweise mit einem Benutzernamen und einem Kennwort als Benutzerdaten. In einem zweiten Schritt S2 werden Daten durch die Programminstanz verschlüsselt und signiert. Die Daten umfassen die Benutzerdaten. In Schritt S3 werden die Daten über ein Übertragungsmedium von der Programminstanz zur Baugruppe übertragen und in Schritt S4 in der Baugruppe entschlüsselt. Die Programminstanz wird in Schritt S5 gegenüber der Baugruppe als Absender der Daten authentifiziert und in Schritt 6 wird der Benutzer durch das Baugruppenrechtesystem mit Hilfe der Benutzerdaten authentifiziert.

### Bezugszeichenliste

- 100: Automatisierungsnetzwerk
- 102: Steuergerät
- 104: Baugruppe
- 106: Programminstanz
- 108: Übertragungskanal
- 109: Schnittstelle
- 110: privater Programminstanz-Schlüssel
- 111: Schnittstelle
- 112: öffentlicher Baugruppen-Schlüssel
- 116: privater Baugruppen-Schlüssel
- 118: Benutzerdaten
- 120: Daten
- 200: Automatisierungsnetzwerk
- 202: Speichermedium
- 204: Prozessor
- 206: Prozessor
- 208: Speichermedium
- 210: Speichermedium

## Patentansprüche

1. Verfahren zur sicheren Datenübertragung in einem Automatisierungsnetzwerk (100), wobei das Automatisierungsnetzwerk zumindest eine Programminstanz (106) und zumindest eine Baugruppe (104) umfasst, wobei die Programminstanz über ein Programminstanzrechtesystem und die Baugruppe über ein Baugruppenrechtesystem verfügt, und wobei das Verfahren die folgenden Schritte umfasst:
- Authentifizierung (S1) eines Benutzers durch das Programminstanzrechtesystem mit Hilfe von Benutzerdaten zur Freigabe einer Nutzung der Programminstanz durch den Benutzer;
- Verschlüsselung (S2) und Signierung von Daten (120) durch die Programminstanz, wobei die Daten die Benutzerdaten umfassen;
- Übertragung (S3) der Daten über ein Übertragungsmedium (108; 202) von der Programminstanz zur Baugruppe;
- Entschlüsselung (S4) der Daten in der Baugruppe;
- Authentifizierung (S5) der Programminstanz gegenüber der Baugruppe; und
- Authentifizierung (S6) des Benutzers durch das Baugruppenrechtesystem mit Hilfe der Benutzerdaten.

2. Verfahren nach Anspruch 1, wobei die Verschlüsselung eine asymmetrische Verschlüsselung ist.

3. Verfahren nach Anspruch 2, wobei die Programminstanz und die Baugruppe jeweils einen asymmetrischen öffentlichen Programminstanzschlüssel und einen asymmetrischen öffentlichen Baugruppenschlüssel (112) aufweisen, und wobei die Programminstanz einen privaten Programminstanzschlüssel (110) und die Baugruppe einen privaten Baugruppenschlüssel (116) aufweist, wobei das Verfahren die folgenden Schritte umfasst:
- asymmetrische Verschlüsselung der Daten in der Programminstanz mit dem öffentlichen Baugruppenschlüssel und Signierung der Daten mit dem privaten Programminstanzschlüssel;
- Übertragung der verschlüsselten und signierten Daten von der Programminstanz zur Baugruppe; und
- Entschlüsselung der verschlüsselten Daten in der Baugruppe mit dem privaten Baugruppenschlüssel und Authentifizierung der Programminstanz als Absender der Daten mit dem öffentlichen Programminstanzschlüssel.

4. Verfahren nach einem der vorhergehenden Ansprüche, wobei die verschlüsselten und signierten Daten durch die Programminstanz auf ein Speichermedium (202) gespeichert werden und vor der Entschlüsselung in der Baugruppe vom Speichermedium gelesen werden.

5. Verfahren nach einem der Ansprüche 1-3, wobei die verschlüsselten und signierten Daten über eine Kabelverbindung (108) zwischen der Programminstanz und der Baugruppe übertragen werden.

6. Verfahren nach Anspruch 5, wobei die Datenübertragung über die Kabelverbindung mittels eines der folgenden Protokolle erfolgt: MPI, PROFIBUS, Ethernet, TCP-IP, PROFINET.

7. Verfahren nach Anspruch 5, wobei die Datenübertragung über eine drahtlose Verbindung mittels eines der folgenden Protokolle erfolgt: Ethernet, TCP-IP, PROFINET.

8. Verfahren nach einem der vorhergehenden Ansprüche, wobei die Daten einen symmetrischen Schlüssel für verschlüsselte Datenübertragungen von der Programminstanz zur Baugruppe umfassen.

9. Verfahren nach einem der Ansprüche 3-7, wobei die Daten einen weiteren privaten Baugruppenschlüssel und einen weiteren öffentlichen Programminstanzschlüssel für verschlüsselte Datenübertragungen von der Programminstanz zur Baugruppe umfassen.

10. Steuergerät (102) in einem Automatisierungsnetzwerk, wobei das Steuergerät eine Programminstanz umfaßt und zur Durchführung eines Verfahrens gemäß einem der Ansprüche 1 bis 9 ausgebildet ist, und wobei die Programminstanz über ein Programminstanzrechtesystem verfügt, mit:
- Mitteln (208) zur Authentifizierung eines Benutzers durch das Programminstanzrechtesystem mit Hilfe von Benutzerdaten zur Freigabe einer Nutzung der Programminstanz durch den Benutzer;
- Mitteln (110; 112; 208) zur Verschlüsselung und Signierung von Daten durch die Programminstanz, wobei die Daten die Benutzerdaten umfassen; und
- Mitteln (109) zur Übertragung der Daten über ein Übertragungsmedium

11. Baugruppe (104) in einem Automatisierungsnetzwerk, wobei die Baugruppe über ein Baugruppenrechtesystem verfügt und zur Durchführung eines Verfahrens gemäß einem der Ansprüche 1 bis 9 ausgebildet ist, mit:
- Mitteln (111) zum Empfang von Daten;
- Mitteln (116; 210) zur Entschlüsselung von Daten;
- Mitteln (114; 210) zur Authentifizierung eines Steuergeräts als Absender der Daten; und
- Mitteln (210) zur Authentifizierung eines Benutzers durch das Baugruppenrechtesystem mit Hilfe der Benutzerdaten.

12. Automatisierungsnetzwerk umfassend ein Steuergerät gemäß Anspruch 10, wobei das Steuergerät zum Übertragen von Daten über ein Übertragungsmedium von dem Steuergerät zur Baugruppe ausgebildet ist, und einer Baugruppe gemäß Anspruch 11, wobei die Baugruppe zum Empfang der übertragenen Daten ausgebildet ist.

13. Computerlesbares Speichermedium (206) mit Instruktionen, die bei Ausführung in einer Baugruppe in einem Automatisierungsnetzwerk, wobei die Baugruppe über ein Baugruppenrechtesystem verfügt, die Baugruppe zur Ausführung des folgenden Verfahrens veranlassen:
- Empfang von Daten;
- Entschlüsselung von Daten;
- Authentifizierung eines Steuergeräts als Absender der Daten; und
- Authentifizierung eines Benutzers durch das Baugruppenrechtesystem mit Hilfe der Benutzerdaten,
wobei das computerlesbare Speichermedium zur Durchführung eines Verfahrens gemäß einem der Ansprüche 1 bis 9 ausgebildet ist.

## Claims

1. Method for secure data transfer in an automation network (100), wherein the automation network comprises at least one program invocation (106) and at least one subassembly (104), wherein the program invocation has a program invocation rights system and the subassembly a subassembly rights system, and wherein the method contains the following steps:
- authentication (S1) of a user by the program invocation rights system with the help of user data for approving a use of the program invocation by the user;
- encryption (S2) and signing of data (120) by the program invocation, wherein the data contains the user data;
- transfer (S3) of the data via a transfer medium (108; 202) from the program invocation to the subassembly;
- decryption (S4) of the data in the subassembly;
- authentication (S5) of the program invocation vis-à-vis the subassembly; and
- authentication (S6) of the user by the subassembly rights system with the help of the user data.

2. Method according to claim 1, wherein the encryption is an asymmetric encryption.

3. Method according to claim 2, wherein the program invocation and the subassembly in each case have an asymmetric public program invocation key and an asymmetric public subassembly key (112), and wherein the program invocation has a private program invocation key (110) and the subassembly a private subassembly key (116), wherein the method contains the following steps:
- asymmetric encryption of the data in the program invocation with the public subassembly key and signing of the data with the private program invocation key;
- transfer of the encrypted and signed data from the program invocation to the subassembly; and
- decryption of the encrypted data in the subassembly with the private subassembly key and authentication of the program invocation as the sender of the data with the public program invocation key.

4. Method according to one of the preceding claims, wherein the encrypted and signed data is stored by the program invocation on a storage medium (202) and prior to the decryption in the subassembly is read from the storage medium.

5. Method according to one of claims 1-3, wherein the encrypted and signed data is transferred via a cable link (108) between the program invocation and the subassembly.

6. Method according to claim 5, wherein the data transfer is effected via the cable link by means of one of the following protocols: MPI, PROFIBUS, Ethernet, TCP-IP, PROFINET.

7. Method according to claim 5, wherein the data transfer is effected via a wireless link by means of one of the following protocols: Ethernet, TCP-IP, PROFINET.

8. Method according to one of the preceding claims, wherein the data contains a symmetrical key for encrypted data transfers from the program invocation to the subassembly.

9. Method according to one of claims 3-7, wherein the data contains a further private subassembly key and a further public program invocation key for encrypted data transfers from the program invocation to the subassembly.

10. Control device (102) in an automation network, wherein the control device contains a program invocation and is designed to perform a method according to one of claims 1 to 9, and wherein the program invocation has a program invocation rights system, with:
- means (208) for authentication of a user by the program invocation rights system with the help of user data for approving a use of the program invocation by the user;
- means (110; 112; 208) for encryption and signing of data by the program invocation, wherein the data contains the user data; and
- means (109) for transferring the data via a transfer medium.

11. Subassembly (104) in an automation network, wherein the subassembly has a subassembly rights system and is designed to perform a method according to one of claims 1 to 9, with:
- means (111) for receiving data;
- means (116; 210) for decrypting data;
- means (114; 210) for authenticating a control device as the sender of the data; and
- means (210) for authentication of a user by the subassembly rights system with the help of the user data.

12. Automation network containing a control device according to claim 10, wherein the control device is designed to transfer data via a transfer medium from the control device to the subassembly, and a subassembly according to claim 11, wherein the subassembly is designed to receive the transferred data.

13. Computer-readable storage medium (206) with instructions, which during execution in a subassembly in an automation network, wherein the subassembly has a subassembly rights system, prompt the subassembly to execute the following method:
- receipt of data;
- decryption of data;
- authentication of a control device as the sender of the data; and
- authentication of a user by the subassembly rights system with the help of the user data,
wherein the computer-readable storage medium is designed to perform a method according to one of claims 1 to 9.

## Revendications

1. Procédé de transmission sécurisée de données dans un réseau ( 100 ) d'automatisation, le réseau d'automatisation comprenant au moins une instance ( 106 ) de programme et au moins un module ( 104 ), l'instance de programme disposant d'un système de droit d'instance de programme et le module d'un système de droit de module et le procédé comprenant les stades suivants :
- authentification ( S1 ) d'un utilisateur par le système de droit d'instance de programme, à l'aide de données utilisateur, pour la libération d'une utilisation de l'instance de programme par l'utilisateur ;
- chiffrement ( S2 ) et signature de données ( 120 ) par l'instance de programme, les données comprenant les données utilisateur ;
- transmission ( S3 ) des données par un support ( 108, 202 ) de transmission de l'instance de programme au module ;
- déchiffrement ( S4 ) des données dans le module ;
- authentification ( S5 ) de l'instance de programme par rapport au module ; et
- authentification ( S6 ) de l'utilisateur par le système de droit de module à l'aide des données utilisateur.

2. Procédé suivant la revendication 1, dans lequel le chiffrement est un chiffrement dissymétrique.

3. Procédé suivant la revendication 2, dans lequel l'instance de programme et le module ont respectivement une clé d'instance de programme publique dissymétrique et une clé ( 112 ) de module publique dissymétrique et l'instance de programme a une clé ( 110 ) d'instance de programme privée et le module a une clé ( 116 ) de module privée, le procédé comprenant les stades suivants :
- chiffrement dissymétrique des données dans l'instance de programme par la clé de module publique et signature des données par la clé d'instance de programme privée ;
- transmission des données chiffrées et signées de l'instance de programme au module ; et
- déchiffrement des données chiffrées dans le module par la clé de module privée et authentification de l'instance de programme comme émetteur des données par la clé d'instance de programme publique.

4. Procédé suivant l'une des revendications précédentes, dans lequel les données chiffrées et signées sont mémorisées par l'instance de programme sur un support ( 202 ) de mémoire et sont lues par le support de mémoire avant le déchiffrement dans le module.

5. Procédé suivant l'une des revendications 1 à 3, dans lequel les données chiffrées et signées sont transmises par une liaison ( 108 ) par câble entre l'instance de programme et le module.

6. Procédé suivant la revendication 5, dans lequel la transmission de données s'effectue par la liaison par câble, au moyen de l'un des protocoles suivants : MPI, PROFIBUS, Ethernet, TCP-IP, PROFINET.

7. Procédé suivant la revendication 5, dans lequel la transmission de données s'effectue par une liaison sans fil, au moyen de l'un des protocoles suivants : Ethernet, TCP-IP, PROFINET.

8. Procédé suivant l'une des revendications précédentes, dans lequel les données comprennent une clé symétrique pour des transmissions de données chiffrées de l'instance de programme au module.

9. Procédé suivant l'une des revendications 3 à 7, dans lequel les données comprennent une autre clé de module privée et une autre clé d'instance de programme publique pour les transmissions de données chiffrées de l'instance de programme au module.

10. Appareil ( 102 ) de commande dans un réseau d'automatisation, l'appareil de commande comprenant une instance de programme et étant constitué pour effectuer un procédé suivant l'une des revendications 1 à 9 et dans lequel l'instance de programme dispose d'un système de droit d'instance de programme comprenant :
- des moyens ( 208 ) d'authentification d'un utilisateur par le système de droit d'instance de programme, à l'aide de données utilisateur, pour la libération de l'utilisation de l'instance de programme par l'utilisateur ;
- des moyens ( 110, 112, 208 ) de chiffrement et de signature de données par l'instance de programme, les données comprenant les données utilisateur ; et
- des moyens ( 109 ) de transmission des données par un support de transmission.

11. Module ( 104 ) dans un réseau d'automatisation, dans lequel le module dispose d'un système de droit de module et est constitué pour effectuer un procédé suivant l'une des revendications 1 à 9, comprenant :
- des moyens ( 111 ) de réception de données ;
- des moyens ( 116, 210 ) de déchiffrement de données ;
- des moyens ( 114, 210 ) d'authentification d'un appareil de commande comme émetteur des données ; et
- des moyens ( 210 ) d'authentification d'un utilisateur par le système de droit de module à l'aide des données utilisateur.

12. Réseau d'automatisation comprenant un appareil de commande suivant la revendication 10, dans lequel l'appareil de commande est constitué pour la transmission de données par un support de transmission de l'appareil de commande au module et comprenant un module suivant la revendication 11, le module étant constitué pour la réception des données transmises.

13. Support ( 206 ) de mémoire pouvant être lu par un ordinateur ayant des instructions qui, lorsqu'elles sont réalisées dans un module d'un réseau d'automatisation, le module disposant d'un système de droit de module, font que le module effectue les procédés suivants :
- réception de données ;
- déchiffrement de données ;
- authentification d'un appareil de commande comme émetteur des données ; et
- authentification d'un utilisateur par le système de droit de module à l'aide des données utilisateur,
le support de mémoire, pouvant être lu par un ordinateur, étant constitué pour effectuer un procédé suivant l'une des revendications 1 à 9.
